# EUROPÄISCHE PATENTSCHRIFT

(11) **EP 1 817 549 B1**
(45) Veröffentlichungstag und Bekanntmachung des Hinweises auf die Patenterteilung: **14.08.2013**
(21) Anmeldenummer: 05813553.4
(22) Anmeldetag: 16.11.2005
(51) Int. Cl.: G01D 5/244

(54) **DREHWERTGEBER UND RUNDLÄUFERMASCHINE**
ANGLE OF ROTATION INDICATIOR AND ROTARY TABLE MACHINE
INDICATEUR D'ANGLE DE ROTATION ET MACHINE A PLATEAUX TOURNANTS

(30) Priorität: 18.11.2004 DE 102004055745
(43) Veröffentlichungstag der Anmeldung: 15.08.2007
(73) Patentinhaber: KRONES Aktiengesellschaft, 93073 Neutraubling (DE)
(72) Erfinder: DAVIDSON, Hartmut, 93152 Nittendorf (DE)
(74) Vertreter: Grünecker, Kinkeldey, Stockmair & Schwanhäusser
(86) Internationale Anmeldenummer: PCT/EP2005/012273
(87) Internationale Veröffentlichungsnummer: WO 2006/053729

(56) Entgegenhaltungen:
- EP-A- 0 660 263
- WO-A-00/36377
- CH-A- 397 261
- DE-A1- 3 636 000
- DE-A1- 4 123 781

## Beschreibung

Die Erfindung betrifft einen Drehwertgeber mit mindestens einer Spur mit einer Impulsfolge zur Erzeugung von Signalpulsen, eine Rundläufermaschine mit einem Drehwertgeber, sowie zwei Verfahren, die Drehwertgeber betreffen.

Bei Rundläufermaschinen wie beispielsweise Etikettier-, Streckblas-, Inspektions-, Verschließmaschinen für Gefäße wie Flaschen, Dosen, Becher oder dergleichen, bei Füllern für derartige Gefäße, bei Reinigungsmaschinen, z.B. Rinser, für derartige Gefäße u. ä. muss die Position eines Rundläufers mit hoher Präzision bestimmt werden.

Derartige Rundläufermaschinen weisen in der Regel eine Mehrzahl von gleichen Einrichtungen auf, die in einer bestimmten Winkelteilung am Umfang des Rundläufers angeordnet sind.

So kann eine Etikettiermaschine beispielsweise über bis zu 60 oder 70 Drehteller oder mehr verfügen, mit denen zu etikettierende Gefäße positioniert werden können, um die Etiketten auf den Gefäßen wohlpositioniert anzubringen.

Bei Füllern ist es möglich, eine ähnliche Anzahl von Füllventilen am Umfang des Rundläufers zu verteilen.

Der Winkelabstand zwischen zwei derartigen identischen Einrichtungen wird Maschinenteilung genannt.

Um bei der Behandlung der Gegenstände mit der Rundläufermaschine eine möglichst genaue Steuerung zu erreichen, ist es nötig, die Position des Rundläufers in Bezug auf die Maschinenteilung zu kennen. Das bedeutet, dass bei einer Maschine mit einer Maschinenteilung von beispielsweise 10° dieser Winkelbereich mit einer Auflösung von 1/500° genau bekannt sein muss.

Je nach den Anforderungen können auch geringere oder höhere Auflösungen möglich sein.

Aus dem Stand der Technik ist es hierzu beispielsweise aus der DE 694 11 178 T2 bekannt, an einem Antriebsrad der Welle des Rundläufers ein Sensorzahnrad vorzusehen, das mit einem Drehwertgeber verbunden ist.

Aus der Praxis ist es hierbei bekannt, das Sensorzahnrad und das Antriebszahnrad so abzustimmen, dass die Rotation des Rundläufers um eine Maschinenteilung einer Rotation einer Drehwertgebers um eine Umdrehung entspricht. Wird also ein Rundläufer mit einer Maschinenteilung von 10° um 10° gedreht, hat sich das Sensorzahnrad einmal um 360° gedreht. Der Drehwertgeber kann Signale erzeugen, die seine Position bei der vollen Umdrehung mit einer gewünschten Auflösung wiedergeben.

Nachteilig ist hierbei, dass für jede Maschinenteilung ein eigenes Sensorzahnrad konstruiert werden muss, so dass die Rotation des Rundläufers um eine Maschinenteilung einer vollen Drehung des Sensorzahnrads entspricht.

Aufgabe der vorliegenden Erfindung ist es daher, einen Drehwertgeber und eine Rundläufermaschine zu schaffen, mit denen es möglich ist, möglichst einfach Maschinen mit verschiedenen Maschinenteilungen zu konstruieren.

Diese Aufgabe wird gelöst mit einer Rundläufermaschine mit den Merkmalen von Anspruch und einer verwendung nach Anspruch 12. Bevorzugte Ausführungsformen sind in den Unteransprüchen offenbart.

Bei dem Drehwertgeber ist es möglich, die erzeugten Signalpulse wählbar zu untersetzen. Dies bedeutet, dass statt zum Beispiel von zehn erzeugten Signalpulsen nur ein Signalpuls ausgegeben wird. Dies entspräche einer Untersetzung von 10:1.

Mit einem solchen Drehwertgeber ist es möglich, die benötigte Information über die Position des Rundläufers bei unmittelbarer Kopplung des Drehwertgebers an eine Welle des Rundläufers zu erhalten. Dazu wird die entsprechende Untersetzung gemäß der Maschinenteilung gewählt. Ein solcher Drehwertgeber kann somit für verschiedene Maschinen mit verschiedenen Maschinenteilungen eingesetzt werden.

Weiterhin ist kein mechanisches Getriebe nötig.

Weist der Drehwertgeber beispielsweise eine Spur mit einer Impulsfolge von 1 Mio. Impulsen auf, werden bei einer Umdrehung 1 Mio. Signalpulse erzeugt. Bei einer Maschinenteilung von 3,6° (d.h., dass 100 identische Baugruppen vorgesehen sind) kann mit einer Untersetzung von 10 000:1 ein Signalpuls pro Drehung um eine Maschinenteilung erreicht werden.

Mit entsprechend geringeren Untersetzungen können Signalpulse generiert werden, die die Position innerhalb einer Maschinenteilung auflösen.

Wird beispielsweise im obigen Beispiel eine Untersetzung von 2:1 gewählt, so entspricht das ausgegebene Signal demjenigen eines herkömmlichen Drehwertgebers mit einer Spur mit 5000 Impulsen, die bei einer Umdrehung ausgegeben werden, der mit einem entsprechenden Getriebe so gekoppelt ist, dass er sich bei Drehung der Maschine um eine Maschinenteilung selber einmal um 360° dreht.

Vorteilhaft sind zwei Spuren mit einer 90° Phasenverschiebung, so dass aus der Phasenverschiebung die Drehrichtung ermittelt werden kann.

Weiter ist es vorteilhaft, wenn mehrere verschiedene frei programmierbare Untersetzungen möglich sind. Dadurch können verschiedene Spuren eines herkömmlichen Drehwertgebers simuliert werden, wie oben beispielsweise eine Spur mit 5000 Impulsen pro Umdrehung und mit einem Impuls pro Umdrehung.

Um die Untersetzungen auszuwählen, ist vorteilhafterweise eine Programmierung des Drehwertgebers möglich. Die Programmierung kann beispielweise mit Hilfe einer Tastatur, Schaltern, einer Fernbedienung, einem Computer o. ä. erfolgen.

Weiterhin weist der Drehwertgeber vorzugsweise einen Speicher zum Speichern der Untersetzungsinformation auf, so dass die Information nicht jedes Mal neu eingegeben oder übertragen werden muss.

Vorteilhaft ist weiterhin, den Nullpunkt der Untersetzung frei zu wählen. Dies bedeutet, dass zum Beispiel einer Untersetzung von 10 000:1 festgesetzt wird, welcher der 10 000 Impulse zur Ausgabe des einzelnen Signalpulses führt. Dadurch ist eine mechanische Justage des Nullpunkts, mit der eine bestimmte Position des Rundläufers in Bezug auf die Maschinenteilung im Vergleich zu einer Nullmarke einjustiert wird, unnötig, da diese vielmehr durch eine Auswahl stattfinden kann.

Weiterhin kann es vorteilhaft sein, verschiedene Nullpunkte für verschiedene Ausgaben, d.h. für die verschiedenen Untersetzungen wählen zu können.

Die wählbaren Untersetzungen liegen vorteilhafterweise im Intervall von 2:1 bis 10 000:1. Mögliche Intervallgrenzen sind 3:1, 4:1, 5:1, 10:1, 20:1, 50:1, 100:1, 200:1, 500:1, 1000:1, 2000:1 oder 5000:1.

Eine vorteilhafte Ausführungsform der Erfindung soll an Hand der beiliegenden Figuren erläutert werden. Dabei zeigt:
- Figur 1: eine schematische Schnittansicht einer Rundläufermaschine,
- Figur 2: eine schematische Draufsicht auf eine Rundläufermaschine,
- Figur 3: eine schematische Darstellung eines Drehwertgebers,
- Figur 4: eine schematische Darstellung einer Scheibe mit einer Spur eines Drehwertgebers.

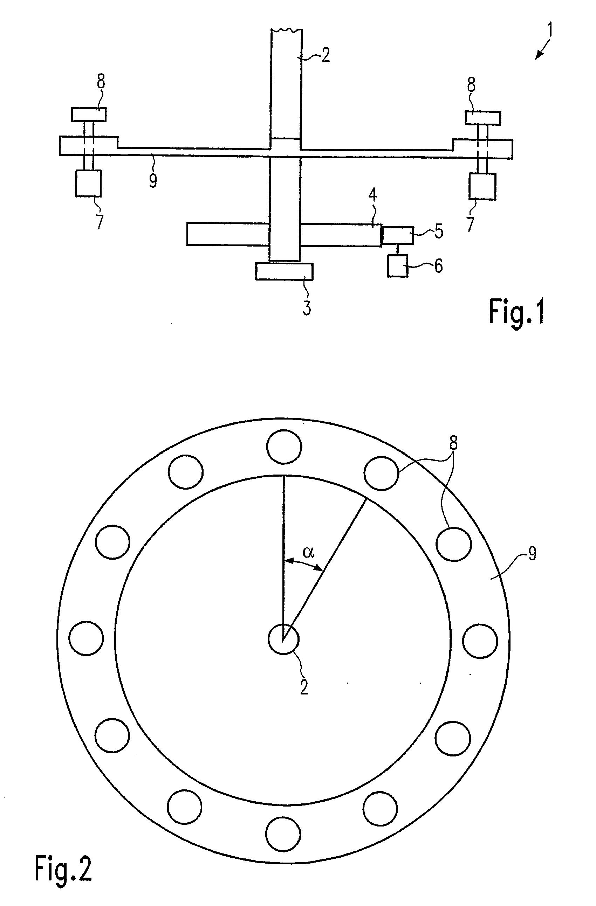

In Figur 1 ist eine Rundläufermaschine 1 mit einer zentralen Welle 2 dargestellt. An der zentralen Welle 2 ist ein Rotor 9 befestigt. Am Umfang des Rotors 9 befinden sich beispielsweise Drehteller 8, die über Servomotoren 7 gedreht werden können. Solche Drehteller 8 werden beispielsweise bei Etikettiermaschinen verwendet.

Rundläufermaschinen werden aber auch bei Füllern, Formblasmaschinen, Verschließmaschinen u.ä. eingesetzt.

Um die Welle 2 anzutreiben, ist ein Zahnrad 4 vorgesehen, an das ein Zahnrad 5 eingreift, das von einem Motor 6 angetrieben wird.

Zur Erfassung der Position der welle 2 oder des Rotors 9 ist ein Drehwertgeber 3 an der welle 2 vorgesehen. Dieser ist unmittelbar mit der Welle 2 ohne dazwischen liegendes Getriebe verbunden.

In Figur 2 ist schematisch eine Draufsicht auf die Vorrichtung aus Figur 1 dargestellt. Zu erkennen ist der Rotor 9 mit dem Drehtellern 8, die am Umfang des Rotors 9 verteilt sind. Der Rotor 9 weist 12 Drehteller 8 auf. Der Winkelabstand *α* beträgt in diesem Fall 30°. Das heißt, die Maschinenteilung beträgt 30°.

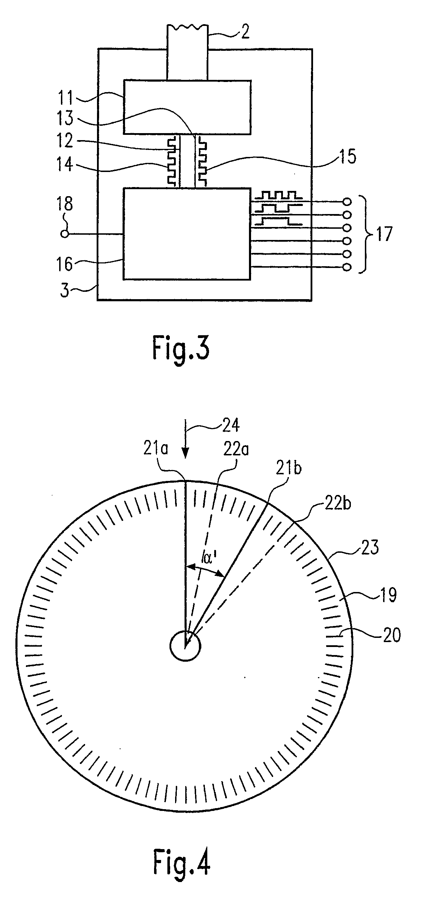

In Figur 3 ist schematisch ein Drehwertgeber 3 dargestellt, wie er am unteren Ende einer Welle 2 vorgesehen sein kann.

Der Drehwertgeber 3 umfasst eine Vorrichtung 11, in der eine Spur mit einer Impulsfolge vorgesehen ist, mit der Signalpulse erzeugt werden können.

Die erzeugten Signalpulse werden durch die Leitungen 12 und 13 zu einem Untersetzer 16 geführt. Die in den Leitungen 12 und 13 übermittelten Signalpulse 14, 15 haben eine Phasenverschiebung von 90°, so dass hieraus die Drehrichtung der Spur in der Einrichtung 11 ermittelbar ist.

In dem Untersetzer 16 können verschiedene Untersetzungen durchgeführt werden.

Wie bei dem obersten der Ausgänge 17 schematisch dargestellt, kann auch eine Umsetzung von 1:1 stattfinden. Der zweitoberste Ausgang 17 weist eine Untersetzung 2:1 und der nächste Ausgang eine Untersetzung 4:1 auf.

Die anderen Ausgänge können mit phasenverschobenen Signalpulsen belegt sein, um Drehrichtungen zu ermitteln oder auch mit anderen Untersetzungen belegt sein.

Es könnte auch reichen, dass lediglich ein Signal phasenverschoben ausgegeben wird, um die Drehrichtung zu ermitteln, beispielsweise das mit der höchsten Frequenz von Signalpulsen.

Es sind auch wesentlich höhere Übersetzungen denkbar, wie 100:1, 1000:1, 5000:1 oder 10 000:1.

Die ausgegebenen Signalpulse können gleich lang sein, wie diejenigen, die erzeugt werden. Sie können auch länger als die erzeugten, wie dies in Figur 3 beim dem zweiten und dritten Signalausgang 17 von oben dargestellt ist. Hierbei sind solche Signalpulse vorteilhaft, deren Hi- und Low-Signal gleich lang ist.

Der Untersetzer 16 ist über einen Eingang 18 programmierbar. Der Untersetzer weist entsprechende Speichereinrichtungen für die programmierten Werte auf. Der Untersetzer 16 ist so ausgebildet, dass über den Eingang 18 die Untersetzung wie etwa beispielsweise 5000:1 direkt eingegeben werden kann.

Vorteilhafter ist eine Ausführungsform, bei der nicht der Untersetzungsfaktor eingegeben wird bzw. gewählt wird, sondern ein Maß für die Maschinenteilung eingegeben wird, wie etwa eine Gradzahl, die der Maschinenteilung entspricht oder die Anzahl der identischen Einrichtungen, wie etwa 100 im Falle einer Maschinenteilung von 3,6°. Der Untersetzer 16 berechnet dann aus diesen Angaben selber den benötigten Untersetzungsfaktor.

Durch diese Bauweise braucht der Anwender nicht die Anzahl der Impulse einer Spur zu kennen.

In Figur 4 ist schematisch eine Spur 19 dargestellt, die eine Folge von Impulsen 20 enthält. Die Spur 19 ist auf einer Scheibe 23 angeordnet. Der Winkel α der Maschinenteilung soll wie in Figur 2 30° betragen.

Innerhalb der Maschinenteilung weist die Spur 19 eine große Anzahl von Impulsen 20 auf.

Für den Fall, dass beispielsweise ein Signal erzeugt werden soll, das in einer bestimmten Lage zu der Maschinenteilung ausgerichtet sein soll, ist es nötig, den Nullpunkt des Signals in Bezug auf den Rotor festzulegen.

Ein Beispiel hierfür ist eine Signalfolge, die bei Drehung des Rotors um eine Maschinenteilung genau einen Signalpuls abgibt.

Dieser kann bei Drehung der Scheibe 23 dann abgegeben werden, wenn ein Impuls 20 bei der Linie 21a an der Referenz 24 vorbeiläuft. Ein weiterer Signalpuls würde erzeugt, wenn ein Impuls 20 bei der Linie 21b an der Referenz 24 vorbeiläuft. Zwischen der Linie 21a und 21b ist ein Winkel *α*' eingeschlossen, der der Maschinenteilung entspricht.

Die Linien 22a und 22b schließen auch einen Winkel *α*' ein, der der Maschinenteilung entspricht, weisen jedoch einen anderen Nullpunkt auf. Durch Wahl des entsprechenden Nullpunkts kann so das Signal in phasenrichtiger Beziehung zu der Maschinenteilung festgesetzt werden.

Ein Verfahren, bei dem bei einem Drehwertgeber für eine Rundläufermaschine eine Untersetzung der auszugebenden Signalpulse gewählt wird, wird in der Regel bei der Konstruktion oder bei dem Umbau einer Rundläufermaschine durchgeführt. Dabei kann der entsprechende Drehwertgeber beispielsweise mit einem Computer programmiert werden.

Bei dem Betrieb einer Rundläufermaschine werden die Signale eines Drehwertgebers entsprechend der gewählten Untersetzung untersetzt ausgegeben. Dadurch ist eine Bestimmung der Position des Rundläufers möglich, wobei die Auflösung ausreichen kann, auch die Position innerhalb einer Maschinenteilung aufzulösen.

## Patentansprüche

1. Rundläufermaschine (1) mit einem an einer zentralen Welle (2) befestigten Rotor (9) und mit einem Drehwertgeber (3) mit mindestens einer Spur (19), die auf einer Scheibe (23) angeordnet ist und eine Impulsfolge enthält, wobei der Drehwertgeber (3) zur Erzeugung von Signalpulsen (14,15) ausgebildet ist und wobei der Drehwertgeber (3) derart gestaltet ist, dass sich für die Ausgabe der Signalpulse (14,15) eine Untersetzung wählen lässt und wobei die Scheibe (23) getriebelos mit der zentralen Welle (2) verbunden ist.

2. Rundläufermaschine nach Anspruch 1, wobei mindestens zwei Spuren (19) mit einer gleichen Impulsfolge jedoch mit einer Phasenverschiebung von z.B. 90° vorgesehen sind.

3. Rundläufermaschine nach einem der Ansprüche 1 oder 2, wobei mehrere verschiedene freiprogrammierbare Untersetzungen möglich sind.

4. Rundläufermaschine nach einem der Ansprüche 1 bis 3, wobei die Ausgabe von phasenverschobenen Signalpulsen möglich ist.

5. Rundläufermaschine nach einem der Ansprüche 1 bis 4, wobei zur Auswahl der Untersetzungen eine Programmierung mit einem Computer, einer Eingabeeinrichtung, wie z.B. einer Tastatur, Schaltern, einer Fernbedienung vorgesehen ist.

6. Rundläufermaschine nach einem der Ansprüche 1 bis 5, wobei ein Speicher zum Speichern der Untersetzungsinformation vorgesehen ist.

7. Rundläufermaschine nach einem der Ansprüche 1 bis 6, wobei zur Wahl der Untersetzung ein Maß für die Maschinenteilung gewählt werden kann, wie etwa die Maschinenteilung in Grad oder die Anzahl der identischen Einrichtungen, die die Maschinenteilung definieren.

8. Rundläufermaschine nach einem der Ansprüche 1 bis 7, wobei ein Nullpunkt für die Untersetzung wählbar ist.

9. Rundläufermaschine nach Anspruch 8, wobei verschiedene Nullpunkte für verschiedene Ausgaben (17) wählbar sind.

10. Rundläufermaschine nach einem der Ansprüche 8 oder 9, wobei der Nullpunkt oder die Nullpunkte programmierbar und/oder speicherbar ist sind.

11. Rundläufermaschine nach einem der Ansprüche 1 bis 10, wobei die wählbare Untersetzung im Intervall von 2:1 bis 10.000:1 liegt.

12. Verwendung einer Rundläufermaschine (1) nach einem der vorigen Ansprüche, wobei die Position des Rotors (9) durch die Untersetzung der auszugebenden Signalpulse (14,15) und durch die unmittelbare Kopplung an die zentrale Welle (2) erhalten wird.

13. Verwendung der Rundläufermaschine (1) nach Anspruch 12, wobei die Signalpulse (14,15) des Drehwertgebers (3) entsprechend der gewählten Untersetzung ausgegeben werden.

## Claims

1. Rotary machine (1) with a rotor (9) attached to a central shaft (2) and with a rotary value emitter (3) with at least one track (19) which is arranged on a disc (23) and contains a pulse sequence, wherein the rotary value emitter (3) is adapted to generate signal pulses (14, 15) and wherein the rotary value emitter (3) is formed such that a reduction ratio can be selected for the emission of the signal pulses (14, 15) and wherein the disc (23) is connected gearlessly with the central shaft (2).

2. Rotary machine according to claim 1, wherein at least two tracks (19) are provided with the same pulse sequence but with a phase offset of e.g. 90°.

3. Rotary machine according to any one of claims 1 or 2, wherein a plurality of different freely programmable reduction ratios is possible.

4. Rotary machine according to any one of claims 1 to 3, wherein phase-shifted signal pulses can be emitted.

5. Rotary machine according to any one of claims 1 to 4, wherein to select the reduction ratios, a programming is provided with a computer, an input device such as e.g. a keyboard, switches, a remote control.

6. Rotary machine according to any one of claims 1 to 5, wherein a memory is provided to store the reduction ratio information.

7. Rotary machine according to any one of claims 1 to 6, wherein to select the reduction ratio, a measure for the machine pitch can be selected such as the machine pitch in degrees or the number of identical devices which define the machine pitch.

8. Rotary machine according to any one of claims 1 to 7, wherein a zero point can be selected for the reduction ratio.

9. Rotary machine according to claim 8, wherein different zero points can be selected for different outputs (17).

10. Rotary machine according to any one of claims 8 or 9, wherein the zero point or points can be programmed and/or stored.

11. Rotary machine according to any one of claims 1 to 10, wherein the selectable reduction ratio lies in the range from 2:1 to 10,000:1.

12. Use of a rotary machine (1) according to any one of the preceding claims, wherein the position of the rotor (9) is obtained by the reduction ratio of the signal pulses (14, 15) to be emitted and by the direct coupling to the central shaft (2).

13. Use of a rotary machine (1) according to claim 12, wherein the signal pulses (14, 15) of the rotary value emitter (3) are emitted according to the reduction ratio selected.

## Revendications

1. Machine rotative (1) comportant un rotor (9) fixé sur un arbre central (2) et comportant un indicateur de valeur de rotation (3) avec au moins une piste (19), qui est agencée sur un disque (23) et contient une série d'impulsions, dans laquelle l'indicateur de valeur de rotation (3) est formé pour générer des impulsions de signaux (14, 15) et dans laquelle l'indicateur de valeur de rotation (3) est conçu de sorte qu'une démultiplication peut être choisie pour l'émission des impulsions de signaux (14, 15) et dans laquelle le disque (23) est relié sans engrenage à l'arbre central (2).

2. Machine rotative selon la revendication 1, dans laquelle au moins deux pistes (19) sont prévues avec une même séquence d'impulsions mais avec un décalage de phase de par exemple 90°.

3. Machine rotative selon l'une quelconque des revendications 1 à 2, dans laquelle plusieurs démultiplications différentes librement programmables sont possibles.

4. Machine rotative selon l'une quelconque des revendications 1 à 3, dans laquelle l'émission d'impulsion de signaux avec décalage de phase est possible.

5. Machine rotative selon l'une quelconque des revendications 1 à 4, dans laquelle une programmation avec un ordinateur, un dispositif d'entrée, comme par exemple un clavier, des commutateurs, une commande à distance, est prévue pour la sélection des démultiplications.

6. Machine rotative selon l'une quelconque des revendications 1 à 5, dans laquelle une mémoire est prévue pour l'enregistrement de l'information de démultiplication.

7. Machine rotative selon l'une quelconque des revendications 1 à 6, dans laquelle une mesure du pas de machine peut être choisie en vue d'une sélection de la démultiplication, comme par exemple le pas de machine en degré ou le nombre de dispositifs identiques qui définissent le pas de machine.

8. Machine rotative selon l'une quelconque des revendications 1 à 7, dans laquelle un point neutre peut être sélectionné pour la démultiplication.

9. Machine rotative selon la revendication 8, dans laquelle divers points neutres peuvent être choisis pour diverses émissions (17).

10. Machine rotative selon l'une des revendications 8 ou 9, dans laquelle le point neutre ou les points neutres peut ou peuvent être programmé(s) et/ou être mémorisé(s).

11. Machine rotative selon l'une quelconque des revendications 1 à 10, dans laquelle la démultiplication sélectionnable se situe dans la plage de 2:1 à 10.000:1.

12. Utilisation d'une machine rotative (1) selon l'une quelconque des revendications précédentes, dans laquelle la position du rotor (9) est obtenue grâce à la démultiplication des impulsions de signaux (14, 15) à émettre et grâce au couplage direct sur l'arbre central (2).

13. Utilisation de la machine rotative (1) selon la revendication 12, dans laquelle les impulsions de signaux (14, 15) de l'indicateur de valeur de rotation (3) sont émises d'une manière qui correspond à la démultiplication choisie.
